# EUROPEAN PATENT SPECIFICATION

(11) **EP 2 093 965 B1**
(45) Date of publication and mention of the grant of the patent: **23.01.2019**
(21) Application number: 08003206.3
(22) Date of filing: 21.02.2008
(51) Int. Cl.: H04L 29/08, H04W 4/02, H04W 4/20, H04L 12/18

(54) **Reliable, location and load aware service search proxy (SSP)**
Zuverlässiger, standort- und lastbewusster SSP
Proxy fiable de recherche de service sensible à la charge et à l'emplacement (SSP)

(43) Date of publication of application: 26.08.2009
(73) Proprietor: Nokia Solutions and Networks GmbH & Co. KG, 81541 Munich (DE)
(72) Inventor: Albayrak, Sahin, 14195 Berlin (DE); Andersen, Frank-Uwe, 10625 Berlin (DE); Fan, Changpeng, Dr., 10557 Berlin (DE); Toker, Ahmet Cihat, 14057 Berlin (DE); Weber, Michael, 12679 Berlin (DE)
(74) Representative: Nokia EPO representatives

(56) References cited:
- EP-A- 1 753 195
- WO-A-03/027906
- WO-A-03/088065
- WO-A-2006/072114
- US-A1- 2002 087 684
- US-A1- 2004 162 871
- US-A1- 2004 162 871
- NANDI, ANIMESH: "LALA: Location Aware Load Aware Overlay Anycast" THESIS FOR THE DEGREE MASTER OF SCIENCE, [Online] April 2004 (2004-04), pages 1-41, XP002502676 Rice University, Houston, Texas Retrieved from the Internet: URL:http://scholarship.rice.edu/bitstream/ handle/1911/17714/1419114.PDF?sequence=1> [retrieved on 2008-11-05]
- XIANG Z ET AL: "Peer-to-Peer Based Multimedia Distribution Service" IEEE TRANSACTIONS ON MULTIMEDIA, IEEE SERVICE CENTER, PISCATAWAY, NJ, US, vol. 6, no. 2, 1 April 2004 (2004-04-01), pages 343-355, XP011109145 ISSN: 1520-9210
- RUICHUAN CHEN ET AL: "Hybrid Overlay Structure Based on Virtual Node" COMPUTERS AND COMMUNICATIONS, 2007. ISCC 2007. IEEE SYMPOSIUM ON, IEEE, PI, 1 July 2007 (2007-07-01), pages 1091-1098, XP031159737 ISBN: 978-1-4244-1520-5
- JIANJUN ZHANG ET AL: "GeoGrid: A Scalable Location Service Network" DISTRIBUTED COMPUTING SYSTEMS, 2007. ICDCS '07. 27TH INTERNATIONAL CON FERENCE ON, IEEE, PI, 1 June 2007 (2007-06-01), pages 60-67, XP031114042 ISBN: 978-0-7695-2837-3
- SACHIN KULKARNI ET AL: "A new bio-inspired location search algorithm for peer to peer network based Internet telephony" BIO-INSPIRED MODELS OF NETWORK, INFORMATION AND COMPUTING SYSTEMS, 200 6. 1ST, IEEE, PI, 1 December 2006 (2006-12-01), pages 1-5, XP031089454 ISBN: 978-1-4244-0538-1

## Description

### Technical field of the invention

The invention concerns proxy nodes, telecommunication networks and methods for searching a server.

### Background of the invention

Links that are offered to mobile subscribers are characterized by lower bandwidth and higher costs compared to fixed line subscribers. The operator's backbone network and computation resources are generally considered under-utilized. The scope of this invention is to make use of the high bandwidth core network capabilities when finding services or resources for the subscribers and to save bandwidth at the last link that connects subscribers to the operator network.

This leads to the issue of computational load balancing for modern network hosted applications. Services provided to subscribers such as video transcoding, audio and video streaming or network management services consume significant amounts of computational power. Additionally, it is challenging to engineer solutions that are able to handle geographically inhomogeneous service loads. The conventional approach is overprovisioning or over-engineering, where all parts of the service infrastructure are designed for the highest load to be encountered, resulting in unnecessary costs.

Often it is desired to balance computational load to different computers within an operator owned network to assure scalability and reliability of services to keep calculation performance at a high level and therefore response times low. Additionally network services should ideally be located close to the geographical spot where the requested service is needed. For example, google or ebay servers are country specific. This ensures efficient network usage as network traffic is bound to a limited network region and does not traverse the whole network. Furthermore, if client and service are close to each other, network latency times can be kept low which improves real time capabilities.

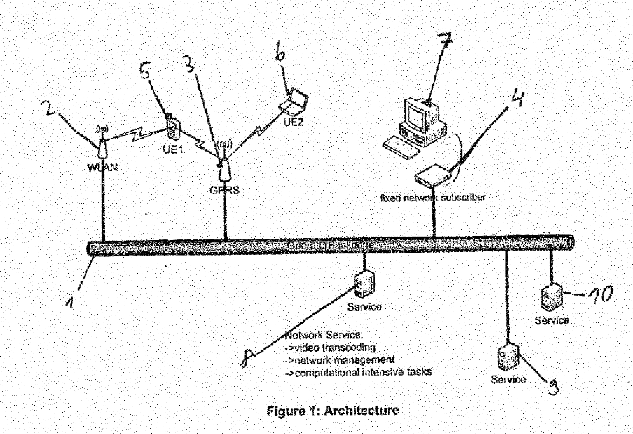

An illustrative example (see Fig. 1) can be multiple video transcoding servers instead of one single transcoding server that help to adapt video streams to the subscriber's radio conditions. The challenge is to determine which servers are currently experiencing a sufficiently low transcoding load and therefore can accept new transcoding tasks. Then, each server could either handle different chunks of the stream to transcode, or one single is selected server that is considered optimal in terms of load and distance to the subscriber's terminal.

When subscribers need to find services that are installed within the core network the following problems occur:
1. How to efficiently discover a server that is providing the desired service, in a location aware and load aware manner (i.e. close by, and providing enough computational capacity)?
2. How to keep network traffic low at the costly links between wireless subscriber and core network during the search? The exchange of control messages over bandwidth limited links between subscriber and core network generates high costs and significantly reduces usable bandwidth.
3. How to reduce user interaction to a minimum? In case of a server failure a new server must be found for the subscriber and the subscriber or the software installed at the end device should not take many or no actions at all. (Security reasons and user-friendliness)
4. How to act mobility aware? Since subscribers may move around in geographical space, is it still possible to always stay connected to a close by service? Can the network recognize user mobility and if so can it find new servers that can handle the moving subscribers?

### Prior art and its Disadvantages

### a) Cluster computer system:

A computer cluster is a group of tightly coupled computers that work together closely so that in many respects they can be viewed as though they are a single computer. The components of a cluster are commonly, but not always, connected to each other through fast local area networks. Clusters are usually deployed to improve performance and/or availability over that provided by a single computer, while typically being much more cost-effective than single computers of comparable speed or availability (definition taken from Wikipedia). Computers added to the cluster system increase calculation power and guarantee system performance. Within computer clusters it is difficult but not impossible to distribute the computational load in a location aware manner if the computers belonging to a cluster are distributed in space. Usually a load balancer unit is used. This is a central computer that distributes incoming requests. Several methods exist for deciding which server to relay a client request to:
- Least connections: a request is sent to the server with the fewest active connections at the moment
- Round-robin: requests are sent to servers in a sequential and circular pattern -- server 1, server2, server3, ,serverN, server1,..
- Fastest: server responsiveness is dynamically measured and requests are sent to the server with the fastest current response time.

The disadvantage is that a cluster does not satisfy the condition of geographical closeness.

### b) Anycast mechanism (in IPv6 networks):

Anycast can be used to find a service in the network. This anycast search would lead to a close by server. Furthermore this solution is robust in terms of single-point-of-failure errors. If a server fails a new IPv6 anycast search initiated by the subscriber device will find a working server in the network.

Unfortunately there is little control about the order in which the different servers are visited. This may lead to an unbalanced system.

### c) Overlay Networks:

A relatively new approach to find close by servers offering enough free computational power in distributed computer systems is the use of overlay networks. An overlay network is a computer network which is built on top of another network. Nodes in the overlay can be thought of as being connected by virtual or logical links, each of which corresponds to a path, perhaps through many physical links, in the underlying network. For example, many peer-to-peer networks are overlay networks because they run on top of the Internet (definition taken from Wikipedia). P2PSIP is an example: It is a recent technology where distributed hash tables (DHT) are used to replace a central SIP presence or directory server by a de-centralized version, spread over the participating subscriber terminals.

The disadvantage is that the wireless link costs are not considered here.

A more recent approach that takes into account both geographical awareness as well as load awareness of the participating servers is a combination of the overlay substrate Pastry [2] in association with the LALA-algorithm (LALA: Location aware load aware anycast [1]). Pastry offers mechanisms to build generic, efficient, scalable, fault resilient and self-organizing peer-to peer distributed object location applications. The LALA-algorithm [1] assumes the service nodes as well as the nodes that request services to be part of the overlay network.

The LALA-algorithm works as follows: In each Pastry overlay node the routing table contains entries to other overlay nodes that are geographically close. The LALA-algorithm relies on Scribe [3] groups whereas Scribe is a group communication tool built on top of Pastry. A Scribe group consists of a number of overlay nodes that are interested in messages related to the same topic. All service offering nodes within the overlay subscribe to a certain Scribe group and Scribe builds a spanning tree that contains all those nodes. If a service must be found, an anycast search message is sent to this group of nodes in the overlay. Anycast is implemented using a distributed depth first search of the group tree. In Scribe, a policy can be defined that specifies in which order the children within the tree are visited. In LALA that policy is easy. The branches in the Scribe tree promising most calculation capacity are visited first during anycast and therefore it is likely to find a close by server offering free capacity. Nodes of that Scribe group must propagate capacity values up the Scribe tree so that nodes can apply that policy.

This solution has some disadvantages, too: The nodes of an overlay network consume network bandwidth as they exchange maintenance messages to discover node failures and to measure distances between them. The amount of exchanged maintenance messages can be reduced but then overlay node failure detection times will suffer. Furthermore, subscriber devices might be switched on and off quite often. This generates additional network traffic since whenever new nodes are added to an overlay network routing tables must be exchanged between participating overlay nodes. The anycast mechanism used by LALA is significantly affected if nodes frequently join or leave the overlay network and they work best in a stable environment, where node arrivals and node departures are rare. If subscriber devices are part of the overlay network they would be responsible to route overlay messages as any node that is part of the overlay does. This would slow down the message delivery process since slow wireless links may be used during that routing. If such an subscriber device is shut down the overlay needs some time to adapt. During that time anycast messages would get lost and no service would be found for that period of time. Service discovery would significantly slow down as the search must be triggered repeatedly until finally the network has adapted and a service is found. It may happen that a server needs to hand over some of its clients to other servers in the network due to capacity decrease or server maintenance shut downs. If the LALA-algorithm is used the subscriber device must trigger a new search for a new server to assure the new server is close by. This is a disadvantage as network traffic is involved at the slow network link. Also it is desired by network operators that their users must not take any action. A hand over should be done within the core network without interference of the subscriber device.

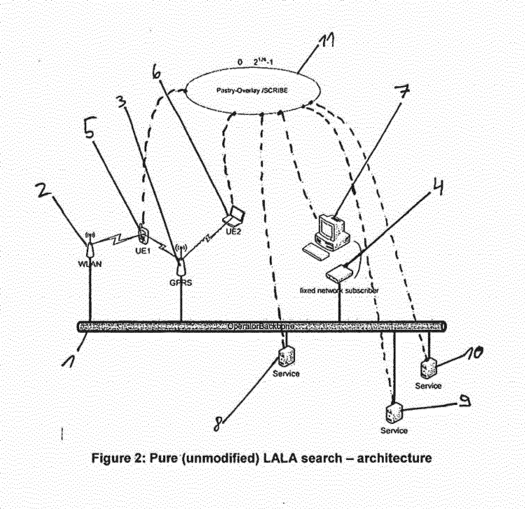

In Figure 2 it can be seen that resource providing components (Services) and subscriber devices are part of the overlay network. Dotted lines illustrate this fact.

Document XP011109145, an article from IEEE transactions on multimedia, Vol.6, 2 April 2004, by Zhe Xiang et AL, refers to peer-to-peer based multimedia distribution service.

Document XP031159737, an article from the IEEE symposium on computer and communications 2007, by Ruichuan Chen, describes a hybrid overlay structure based virtual node.

Document EP-A-1 753 195 relates to a server computer, client device and web service implemented data processing method.

Document WO 2006/072114 A describes geo-locating load balancing.

Document WO-A-03/088065 discloses a method and system for tiered distribution in a content delivery network. Document US 2002/087684 A1 describes a method for load balancing of requests for service by devices on a network and a device and a network for carrying out such a method. Document WO-A-03/027906 relates to configurable adaptive global traffic control and management.

Document XP031114042, an article from the 27th International Conference on Distributed Computing Systems (ICDCS'07), by Jianjun Zhang et AL, describes GeoGrid as a scalable location service network.

US 2004/162871 A1 describes an infrastructure for accessing a peer-to-peer network environment.

All of the presented solutions have one or more drawbacks. Either they fail if only one component fails or they cause lots of traffic on the last costly link. Most of them are not able to adapt to server failures and usually the subscriber must take actions if a service interruption is detected.

### Summary of the invention

Therefore, it is an object of the present invention to overcome these shortcomings of the prior art. This is accomplished by what is set forth in the appended independent apparatus claim 1, network claim 8, method claim 12, and code storing memory device claim 23, while the appended dependent claims define advantageous modifications thereof.

According to an embodiment of the invention, the search process for a matching server is triggered, as before, by a subscriber device, but it is sent to a proxy node instead of being sent directly to overlay peer nodes. This proxy, called "Service Search Proxy" (SSP) represents the set of overlay nodes located in the fixed network part and performs all communication and signaling. The location of the proxy is preferably the fixed network part.

Thereby, the SSP effectively separates the wireless and fixed network domain, while enabling load awareness, avoiding bottlenecks, respecting location aware searches, and representing the subscriber device which will receive the search results. The SSP, representing the starting point for any searches according to the LALA algorithm can be placed between any network boundaries where it makes sense to separate them, i.e. not limited to mobile networks.

### Advantages of the invention:

- The invention allows a location aware (considering the subscriber device and server position) and load aware (searching for a server with currently enough resources to provide a service to the subscriber device) resource localization process.
- The use of multiple SSP servers avoids the single-point-of-failure error.
- The implementation significantly reduces traffic at the wireless links (or slow modem links) between subscriber device and operator network when seeking a service since the subscriber devices are not part of the overlay network.
- Any component in the operator network can decide to move handled subscriber devices from one server to another without any interference of the subscriber device software. Reasons for such a server hand over can be server overload or user mobility.
- Servers in the operator network are expected to be set on or off rarely. The configuration within the operator backbone seems to be quite stable. This assures that the LALA search, which relies on the delivery of anycast messages, can complete. Overlay messages are not routed to subscriber devices (as would happen with the pure LALA approach). This also reduces maintenance traffic caused by the overlay nodes. When few nodes join or leave the network, fewer routing tables must be exchanged.
- The subscriber device is not involved in the search process. This reduces subscriber device power consumption and resource utilization and also increases security as the software is mainly executed in the operator network.
- The proposed architecture is fail-safe and reliable. There is no single-point-of-failure at all.
- The architecture scales well. If more calculation power is needed, more servers are implemented.

Other aspects, features and advantages of the present invention will become more fully apparent from the following detailed description of preferred embodiments thereof which is to be taken in conjunction with the appended drawings, in which:
Figure 1 shows an architecture of multiple video transcoding servers,
Figure 2 shows a LALA search architecture,
Figure 3 shows an architecture according to the invention,
Figure 4 shows a sequence diagram and
Figure 5 shows a server failure/overload sequence diagram,
Figure 6 shows a proxy server according to an embodiment of the invention.

Telecommunication networks as such are known to one skilled in the art in detail e.g. from standard specifications available e.g. in the internet (as e.g. for cellular mobile telecommunication systems at www.etsi.org). Therefore details of telecommunication networks which are not very relevant for general understanding the invention are not explained here in detail.

Figure 1 shows an operator backbone network 1 with high transmission capacity, to which operator backbone network 1 a (schematically shown) WLAN network 2, a (schematically shown) GPRS network 3 and a (schematically shown) fixed network 4 for fixed network subscribers 7 are connected. A subscriber 5, 6, 7 with a subscriber device (user equipment or user device UE1 or UE2) can communicate over e.g. a WLAN network, a GPRS network or a fixed network via the backbone with one of the depicted servers 8, 9, 10 ("service") which are respectively able to provide a service to a subscriber 5, 6, 7 via e.g. the backbone network 1 to which they are connected.

Figure 2 schematically shows a LALA search architecture 11 in which subscriber devices are part of an overlay network 11, as explained above in detail.

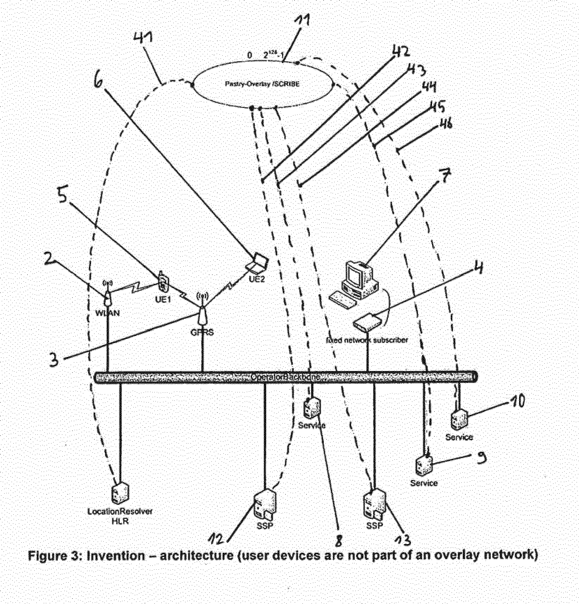

Figure 3 shows an architecture according to the invention, in which subscriber devices are not part of an overlay network 11, 41, 42, 43, 44, 45, 46, whereas Proxy Nodes (SSP 12, 13) are connected to an overlay network 11, 41, 42, 43, 44, 45, 46, which can e.g. be a pastry-overlay/subscribe network.

An embodiment of the presented invention constitutes a policy based network management tool, where the main part, a "policy decision engine" consumes a lot of computational power and should ideally be distributed to multiple nodes, and located close to the mobile users that it has to handle.

The invention avoids the bottlenecks of the slow and unstable links between subscriber device and operator network. The following process is proposed:
It is noted that in principle, other DHT or overlays may be used in conjunction with our invention. The remainder of this section is about an implementation using Pastry in particular.

Within the fast operator network, one or more SSP are placed. Additionally it is assumed a component that is aware of subscriber device locations. In mobile networks this component already exists in the form of a Home Location Register, or, alternatively, the location of the subscriber can be determined by means of GPS and transferred to the SSP within a search query.

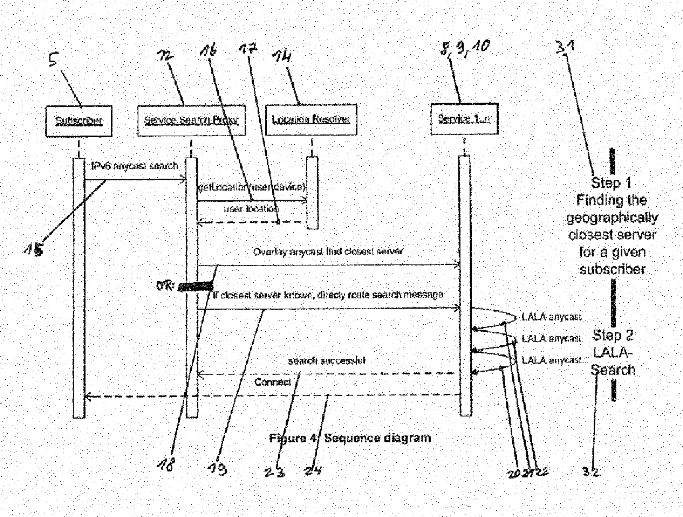

In the embodiment shown in Figure 4 the search process is divided into two steps. First the best server in terms of location will be resolved. Afterwards the LALA-search starts at this server to find a server offering free computational power.

The search process in detail is (referring to Figure 4):

### Step 1 (reference number 31) of the search:

A subscriber device 5 connects to the operator network.

The device 5 uses e.g. an IPv6 Anycast search message (reference number 15) according to Figure 4 to find a SSP 12; if such a server 12 is online it will be found by the Anycast mechanism and its identity will be returned to the subscriber terminal (the use of Anycast is not mandatory; other mechanisms can be used).

The SSP 12 can be located anywhere in the network (even far away from subscriber device).

The location of the subscriber device is acquired with a location resolver 14, e.g. from a Home Location Register or another component in the network or by the subscriber device 5 itself (e.g. using GPS).

The SSP 12 then uses one of the following mechanisms to find a server that is geographically close to the subscriber device.

An overlay anycast message 18 is sent to a Scribe-group of computers that are offering an identical service (which service is requested by te subscrier device 5). All servers 8, 9, 10 offering the service will be visited and each server 8, 9, 10 compares its own location (which the server knows or requests from an entity knowing it) with that of the subscriber device 5 that is noted within the message 18. If the distance is lower than all other distances that have been considered before, the server 8, 9 10 notes its position within the message 18 and the anycast continues. In the end, the server 8 that is closest to the subscriber device 5 is noted within the (forwarded) message and will be informed by the last visited server 9.

In case the SSP 12 does know the locations of the servers 8, 9, 10 already it directly routes (18) to the server 8 that is (e.g. geographically) closest to the subscriber device 5. It cannot be assured that this server is still running since the server list can be out of date. Then the anycast procedure must be used. To obtain a list of running servers 8, 9 10 all servers 8, 9, 10 could periodically send signs of life to the group of SSP 12 components to inform these SSP 12 about their locations. This mechanism can also be used to detect server failures.

### Step 2 of the search:

The LALA-algorithm is then used at that closest server 8 to find a server 9 providing enough computational or other resources.

The SSP 12 will be informed about the success. If no success is reported within a certain time, the search is started again by the SSP 12.

The found server 9 connects to the subscriber device 5 and serves it (providing a service requested by the subscriber device).

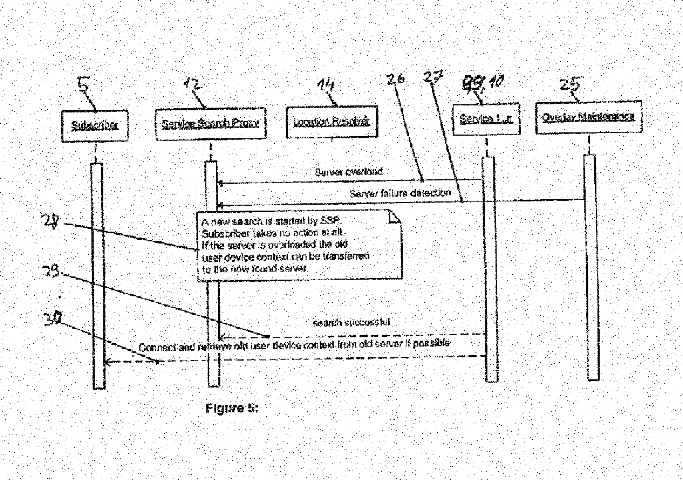

It may happen that a server 9 experiences unexpected high load (high CPU load or too much network traffic) and is not able to handle some of the subscriber devices 5, 6 it served any longer. Furthermore a server 9 may fail. Further a server 9 may detect that a subscriber device 5 is moving and that the server 9 is not the best choice in terms of locality. In all three cases (shown in Figure 5) a new server 8 must be found that serves the subscriber devices 5 involved. A server 9 failure (caused by network interruption or server crash) will be detected by overlay maintenance mechanisms 25, for example by means of missing answers to periodical keep-alive messages, and propagated to all Service Search Proxies in a message 27. In the case the server wants to get rid of subscriber devices the Proxy 12 is informed directly by the server 9 in a message 26. The Proxy 12 now initiates a new search 28 for a new server providing a service for each affected subscriber device 5 with a search mechanism as explained above. If the search 28 is successful, the new server 8 that will provide the service to the subscriber device 5 will inform the SSP 8 with a message 29 and the new server 8 will connect to the subscriber device 5 using a message 30. If the old server 9 is still running, the subscriber device 5 context if present can be requested by the new server in a message 30.

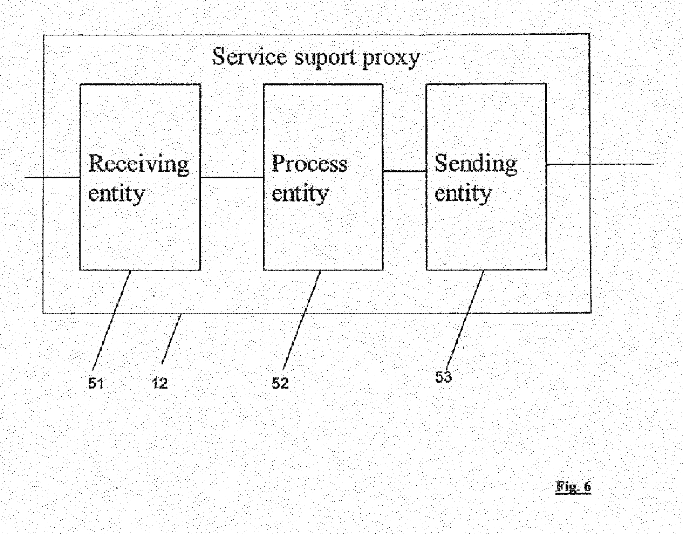

Figure 6 shows elements of a proxy server 12 according to an embodiment of the invention, named in the claims, with a receiving entity 51 receiving messages a sending entity 53 sending messages and a process entity deciding and executing the tasks of a proxy server described here, and especially comprising a search entity 52.

What has been described above is what is presently considered to be a preferred embodiment of the present invention. However, as is apparent to the skilled reader, it is provided for illustrative purposes only and is in no way intended to that the present invention is restricted thereto.

### References used in this document:

[1] Nandi, Animesh: LaLa: Location Aware Load Aware Overlay Anycast. 2004.
[2] Rowstron, Antony and Peter Druschel: Pastry: Scalable, distributed object location and routing for large-scale peer-to-peer systems. In IFIP/ACM International Conference on Distributed Systems Platforms (Middleware), pages 329-350, November 2001.
[3] Castro, Miguel, Peter Druschel, Anne-Marie Kermarrec and Antony Rowstron: Scribe: A large-scale and decentralized application-level multicast infrastructure. IEEE Journal on Selected Areas in Communication (JSAC), 20(8), October 2002.

### List of abbreviations

- LALA:: Location aware Load aware (algorithm)
- SSP:: Service Search Proxy
- HLR:: Home Location Register

## Claims

1. Proxy node (12, 13) for a telecommunication network comprising:
- a receiving entity configured to receive a service request message (15) from a subscriber device (5),
- a search entity (52) configured to search, in proxy for the subscriber device (5), for a first server (8) within a group of servers (8, 9, 10), each of the servers (8, 9, 10) being configured to provide the requested service to the subscriber device (5), the search entity (52) considering in that search, at least a location of the subscriber device (5) and a location of the first server (8), wherein the proxy node is further configured to cause the first server (8) to search a second server (9) having currently enough resources to provide the service to the subscriber device (5),
wherein the proxy node (12) separates a wireless and fixed network domain;
**characterized in that** the search entity (52) of the proxy node (12) is configured to send an overlay anycast message to the group of servers (8, 9, 10) that are offering the requested service, the message causing each server to compare its own location with that of the subscriber device that is noted within the message, the server being configured to note, if the distance is lower than all other distances that have been considered before, its position within the message and the anycast continuing, the server that is closest to the subscriber device being noted within the message and being informed by the last visited server;
and **in that** the proxy node (12) is configured to cause, a first server, at which server a LALA-algorithm is provisioned, to find, a second server providing enough computational or other resources to provide the service.

2. Proxy node according to any of the preceding claims, wherein for consideration of the subscriber device location in the search, the proxy node (12) is configured to request (16) subscriber device location data from a location resolving entity (14).

3. Proxy node according to claim 2, wherein for the considering of the subscriber device location in the search, the proxy node (12) is configured to request subscriber device location data from a location resolving entity (14, 5) configured to use one of: a subscriber data register; a satellite assisted device position detection system; a radio network assisted device position detection system.

4. Proxy node according to any of the preceding claims, wherein for the considering of the subscriber device location and the server location the search entity (52) of the proxy node (12) comprises a search mechanism to find a server with the group of servers (8, 9, 10) that is geographically close to the subscriber device (5).

5. Proxy node according to any of the preceding claims, wherein in case the proxy (12) knows locations of the group of servers (8, 9) already it (12) is configured to directly route a search message to the server that is closest to the subscriber device, the message causing the server to search a server with enough resources to provide the service.

6. Proxy node according to any of the preceding claims, wherein the proxy node (12) is configured to receive information about the success and if no information indicating success is received within a predetermined time, to start the search again.

7. Proxy node according to any of the preceding claims, wherein the proxy node (12) is configured to receive a message (23) from the found server (9) having currently enough resources to provide the service, the message representing an identity of the found server.

8. Telecommunication network comprising
- a proxy node (12) according to any of the preceding claims,
- servers some of them (8, 9, 10) respectively configured to provide a service to the subscriber device (5).

9. Telecommunication network according to claim 8, wherein a first server within the group of servers (8, 9, 10) which is found or known by the proxy node (12) and which is closest to the subscriber device is configured to search (20, 21, 22) after receiving a message from the proxy node (12) a second server (8, 9, 10) with currently enough resources to provide the service.

10. Telecommunication network according to any of the claims 8-9, wherein the found server (9) having enough resources to provide the service, and being found by the closest server, is configured to send a message (24) requesting connection to the subscriber device (5).

11. Telecommunication network according to any of the claims 8-10, wherein a found server (8, 9, 10) with currently enough resources to provide the service, and being found by the closest server, is configured to send to the proxy server a message (23) indicating that it was found.

12. Method for searching a server in a telecommunication network, the method comprising:
- receiving at a proxy server (12) a request message (15) from a subscriber device (5), the request message (15) representing a request for a service,
- the proxy server (12) selecting (18; 19), in proxy for the subscriber device (5), a first server (8) from a group of servers (8, 9, 10), each of the servers (8, 9, 10) being configured to provide the requested service, the selection being dependent on the subscriber device's (5) location and on the location of the selected server (8),
- the selected server (8), searching (20, 21, 22) for a second server (9) having currently enough resources to provide the requested service, and
wherein the proxy node (12) separates a wireless and fixed network domain;
**characterized in that** a search entity of the proxy node (12) sends an overlay anycast message to the group of servers (8, 9, 10) that are offering the requested service, wherein the message causes each server to compare its own location with that of the subscriber device (5) that is noted within the message, and if the distance is lower than all other distances that have been considered before, the server notes its position within the message, the anycast continues, and the server that is closest to the subscriber device is noted within the message and is informed by the last visited server; and **in that** at a first server, which is closest to the subscriber device, a LALA-algorithm is used to find a server providing enough computational or other resources to provide the service.

13. Method according to claim 12, further comprising:
- the server (9) found to have currently enough resources to provide the service, sending a message (23, 24) representing a request for a connection with the subscriber device(5) or the proxy server (12).

14. Method according to any one of the claims 12-13, wherein the proxy node (12) is located in a fixed network or cellular mobile network or any other mobile network.

15. Method according to any of the claims 12-14, wherein the proxy node (12) is located between network boundaries of at least one telecommunication network.

16. Method according to any of the claims 12-15, wherein for considering the subscriber device location in the search, the proxy node (12) requests (16) subscriber device location data from a location resolving unit (14) .

17. Method according to any of the claims 12-16, wherein for considering the subscriber device location in the search, the proxy node (12) requests (16)) subscriber device location data (user location) from a location resolving entity (14) using one of:
a subscriber data register; a satellite assisted device position detection system; a radio network assisted device position detection system.

18. Method according to any of the claims 12-17, wherein for considering of the subscriber device location and of the server location the proxy node (12) uses a search mechanism to find a server (8, 9, 10) that is geographically close to the subscriber device (5).

19. Method according to any of the claims 12-18, wherein in case the proxy (12) knows the locations of the servers (8, 9, 10) already it directly routes a search message to the server that is closest to the subscriber device.

20. Method according to any of the claims 12-19, wherein the proxy node (12) receives information (23) about the success of the search for a server having enough resources, and wherein if no message indicating success is received within a predetermined time, the proxy node (12) starts the search again.

21. Method according to any of the claims 12-20, wherein the proxy node (12) receives a message (23) from the found server (8, 9, 10) with currently enough resources to provide the service, the message representing an identity of the found server.

22. Method according to any of the claims 12-21, wherein a found server (8, 9, 10) having currently enough resources to provide the service, and being found by the closest server, sends a message (23) to the subscriber device (5).

23. Memory device comprising stored code means adapted to produce the steps of any one of the preceding method claims 12-22 when loaded into the memory of a computer.

## Patentansprüche

1. Proxy-Knoten (12, 13) für ein Telekommunikationsnetzwerk, umfassend:
- eine Empfangsinstanz, die zum Empfangen einer Dienstanforderungsnachricht (15) von einer Teilnehmervorrichtung (5) konfiguriert ist,
- eine Suchinstanz (52), die so konfiguriert ist, dass sie in Vertretung der Teilnehmervorrichtung (5) nach einem ersten Server (8) innerhalb einer Gruppe von Servern (8, 9, 10) sucht, wobei jeder der Server (8, 9, 10) zum Bereitstellen des angeforderten Dienstes für die Teilnehmervorrichtung (5) konfiguriert ist, die Suchinstanz (52) bei dieser Suche mindestens einen Standort der Teilnehmervorrichtung (5) und einen Standort des Servers (8) berücksichtigt, wobei der Proxy-Knoten ferner so konfiguriert ist, dass er den ersten Server (8) veranlasst, nach einem zweiten Server (9) zu suchen, der gegenwärtig genügend Ressourcen zum Bereitstellen des Dienstes für die Teilnehmervorrichtung (5) aufweist,
wobei der Proxy-Knoten (12) eine Drahtlos- und eine Festnetzdomäne trennt;
**dadurch gekennzeichnet, dass**
die Suchinstanz (52) des Proxy-Knotens (12) so konfiguriert ist, dass sie eine Anycast-Overlay-Nachricht an die Gruppe von Servern (8, 9, 10) sendet, die den angeforderten Dienst anbieten, wobei die Nachricht jeden Server veranlasst, seinen eigenen Standort mit dem der Teilnehmervorrichtung zu vergleichen, der innerhalb der Nachricht notiert ist, der Server so konfiguriert ist, dass er, wenn die Distanz kürzer als alle anderen Distanzen ist, die vorher berücksichtigt wurden, seine Position innerhalb der Nachricht notiert, und der Anycast fortfährt, wobei der Server, der am nächsten zur Teilnehmervorrichtung ist, innerhalb der Nachricht notiert wird und durch den letzten besuchten Server informiert wird;
und dadurch, dass
der Proxy-Knoten (12) so konfiguriert ist, dass er einen ersten Server, an welchem ein LALA-Algorithmus vorgesehen ist, veranlasst, einen zweiten Server zu finden, der genügend Rechen- oder andere Ressourcen zum Bereitstellen des Dienstes bereitstellt.

2. Proxy-Knoten nach einem der vorhergehenden Ansprüche, wobei der Proxy-Knoten (12) so konfiguriert ist, dass er zur Berücksichtigung des Teilnehmervorrichtungsstandorts bei der Suche Teilnehmervorrichtungsstandortdaten von einer Standortauflösungsinstanz (14) anfordert (16).

3. Proxy-Knoten nach Anspruch 2, wobei der Proxy-Knoten (12) so konfiguriert ist, dass er zum Berücksichtigen des Teilnehmervorrichtungsstandorts bei der Suche Teilnehmervorrichtungsstandortdaten von einer Standortauflösungsinstanz (14, 5) anfordert, die so konfiguriert ist, dass sie eines verwendet von: einem Teilnehmerdatenregister; einem satellitengestützten Vorrichtungspositionserkennungssystem; einem funknetzwerkgestützten Vorrichtungspositionserkennungssystem.

4. Proxy-Knoten nach einem der vorhergehenden Ansprüche, wobei die Suchinstanz (52) des Proxy-Knotens (12) zum Berücksichtigen des Teilnehmervorrichtungsstandorts und des Serverstandorts einen Suchmechanismus zum Auffinden eines geografisch in der Nähe der Teilnehmervorrichtung (5) befindlichen Servers bei der Gruppe von Servern (8, 9, 10) umfasst.

5. Proxy-Knoten nach einem der vorhergehenden Ansprüche, wobei der Proxy (12) so konfiguriert ist, dass er (12), falls er Standorte der Gruppe von Servern (8, 9) bereits kennt, eine Suchnachricht direkt zu dem Server leitet, der am nächsten zur Teilnehmervorrichtung ist, wobei die Nachricht den Server zum Suchen nach einem Server mit genügend Ressourcen zum Bereitstellen des Dienstes veranlasst.

6. Proxy-Knoten nach einem der vorhergehenden Ansprüche, wobei der Proxy-Knoten (12) so konfiguriert ist, dass er Informationen über den Erfolg empfängt und, wenn innerhalb einer vorbestimmten Zeit keine Informationen empfangen werden, die einen Erfolg anzeigen, die Suche neu startet.

7. Proxy-Knoten nach einem der vorhergehenden Ansprüche, wobei der Proxy-Knoten (12) so konfiguriert ist, dass er eine Nachricht (23) vom gefundenen Server (9) mit gegenwärtig genügend Ressourcen zum Bereitstellen des Dienstes empfängt, wobei die Nachricht eine Identität des gefundenen Servers darstellt.

8. Telekommunikationsnetzwerk, umfassend:
- einen Proxy-Knoten (12) nach einem der vorhergehenden Ansprüche,
- Server, wovon einige (8, 9, 10) jeweils zum Bereitstellen eines Dienstes für die Teilnehmervorrichtung (5) konfiguriert sind.

9. Telekommunikationsnetzwerk nach Anspruch 8, wobei ein erster Server innerhalb der Gruppe von Servern (8, 9, 10), der vom Proxy-Knoten (12) gefunden wird oder diesem bekannt ist, und der am nächsten zur Teilnehmervorrichtung ist, so konfiguriert ist, dass er nach Empfang einer Nachricht vom Proxy-Knoten (12) einen zweiten Server (8, 9, 10) mit gegenwärtig genügend Ressourcen zum Bereitstellen des Dienstes sucht (20, 21, 22).

10. Telekommunikationsnetzwerk nach einem der Ansprüche 8 bis 9, wobei der gefundene Server (9), der genügend Ressourcen zum Bereitstellen des Dienstes aufweist und vom nächstgelegenen Server gefunden wird, zum Senden einer Nachricht (24) konfiguriert ist, die eine Verbindung mit der Teilnehmervorrichtung (5) anfordert.

11. Telekommunikationsnetzwerk nach einem der Ansprüche 8 bis 10, wobei ein gefundener Server (8, 9, 10) mit gegenwärtig genügend Ressourcen zum Bereitstellen des Dienstes, der vom nächstgelegenen Server gefunden wird, so konfiguriert ist, dass er eine Nachricht (23) mit der Angabe, dass er gefunden wurde, an den Proxy-Server sendet.

12. Verfahren zum Suchen nach einem Server in einem Telekommunikationsnetzwerk, wobei das Verfahren umfasst:
- Empfangen einer Anforderungsnachricht (15) von einer Teilnehmervorrichtung (5) an einem Proxy-Server (12), wobei die Anforderungsnachricht (15) eine Anforderung eines Dienstes darstellt,
- Auswählen (18; 19) durch den Proxy-Server (12) in Vertretung der Teilnehmervorrichtung (5) eines ersten Servers (8) aus einer Gruppe von Servern (8, 9, 10), wobei jeder der Server (8, 9, 10) zum Bereitstellen des angeforderten Dienstes konfiguriert ist, und die Auswahl vom Standort der Teilnehmervorrichtung (5) und vom Standort des ausgewählten Servers (8) abhängt,
- Suchen (20, 21, 22) durch den ausgewählten Server (8) nach einem zweiten Server (9) mit gegenwärtig genügend Ressourcen zum Bereitstellen des angeforderten Dienstes, und
wobei der Proxy-Knoten (12) eine Drahtlos- und Festnetzwerkdomäne trennt;
**dadurch gekennzeichnet, dass**
eine Suchinstanz des Proxy-Knotens (12) eine Anycast-Overlay-Nachricht an die Gruppe von Servern (8, 9, 10) sendet, die den angeforderten Dienst anbieten, wobei die Nachricht jeden Server veranlasst, seinen eigenen Standort mit dem der Teilnehmervorrichtung (5) zu vergleichen, der innerhalb der Nachricht notiert ist, und der Server, wenn die Distanz kürzer als alle anderen Distanzen ist, die vorher berücksichtigt wurden, seine Position innerhalb der Nachricht notiert, der Anycast fortfährt, und der Server, der am nächsten zur Teilnehmervorrichtung ist, innerhalb der Nachricht notiert wird und durch den letzten besuchten Server informiert wird;
und dadurch, dass
an einem ersten Server, der am nächsten zur Teilnehmervorrichtung ist, ein LALA-Algorithmus verwendet wird, um einen Server aufzufinden, der genügend Rechen- oder andere Ressourcen zum Bereitstellen des Dienstes bereitstellt.

13. Verfahren nach Anspruch 12, ferner umfassend, dass:
- der Server (9), von dem festgestellt wird, dass er genügend Ressourcen zum Bereitstellen des Dienstes aufweist, eine Nachricht (23, 24) sendet, die eine Anforderung einer Verbindung mit der Teilnehmervorrichtung (5) oder dem Proxy-Server (12) darstellt.

14. Verfahren nach einem der Ansprüche 12 bis 13, wobei der Proxy-Knoten (12) sich in einem Festnetz oder einem zellularen Mobilfunknetzwerk oder einem beliebigen anderen Mobilfunknetzwerk befindet.

15. Verfahren nach einem der Ansprüche 12 bis 14, wobei der Proxy-Knoten (12) sich zwischen Netzwerkgrenzen mindestens eines Telekommunikationsnetzwerks befindet.

16. Verfahren nach einem der Anspruch 12 bis 15, wobei der Proxy-Knoten (12) zum Berücksichtigen des Teilnehmervorrichtungsstandorts bei der Suche Teilnehmervorrichtungsstandortdaten von einer Standortauflösungsinstanz (14) anfordert (16).

17. Verfahren nach einem der Anspruch 12 bis 16, wobei der Proxy-Knoten (12) zum Berücksichtigen des Teilnehmervorrichtungsstandorts bei der Suche Teilnehmervorrichtungsstandortdaten (Benutzerstandort) von einer Standortauflösungsinstanz (14) anfordert (16) unter Verwendung von:
einem Teilnehmerdatenregister; einem satellitengestützten Vorrichtungspositionserkennungssystem; einem funknetzwerkgestützten Vorrichtungspositionserkennungssystem.

18. Verfahren nach einem der Anspruch 12 bis 17, wobei der Proxy-Knoten (12) zum Berücksichtigen des Teilnehmervorrichtungsstandorts oder des Serverstandorts einen Suchmechanismus zum Auffinden eines Servers (8, 9, 10) verwendet, der geografisch in der Nähe der Teilnehmervorrichtung (5) ist.

19. Verfahren nach einem der Anspruch 12 bis 18, wobei der Proxy-Knoten (12), falls er die Standorte der Server (8, 9, 10) bereits kennt, eine Suchnachricht direkt zu dem Server leitet, der am nächsten zur Teilnehmervorrichtung ist.

20. Verfahren nach einem der Anspruch 12 bis 19, wobei der Proxy-Knoten (12) Informationen (23) über den Erfolg der Suche nach einem Server mit genügend Ressourcen empfängt, und der Proxy-Knoten (12) die Suche neu startet, wenn innerhalb einer vorbestimmten Zeit keine Nachricht empfangen wird, die einen Erfolg anzeigt.

21. Verfahren nach einem der Anspruch 12 bis 20, wobei der Proxy-Knoten (12) eine Nachricht (23) vom gefundenen Server (8, 9, 10) mit gegenwärtig genügend Ressourcen zum Bereitstellen des Dienstes empfängt, wobei die Nachricht eine Identität des gefundenen Servers darstellt.

22. Verfahren nach einem der Ansprüche 12 bis 21, wobei der gefundene Server (8, 9, 10), der gegenwärtig genügend Ressourcen zum Bereitstellen des Dienstes aufweist und vom nächstgelegenen Server gefunden wird, eine Nachricht (23) an die Teilnehmervorrichtung (5) sendet.

23. Speichervorrichtung, umfassend gespeicherte Codemittel, die zum Erzeugen der Schritte nach einem der vorhergehenden Verfahrensansprüche 12 bis 22 ausgelegt sind, wenn in den Speicher eines Computers geladen.

## Revendications

1. Noeud mandataire (12, 13) pour un réseau de télécommunication comprenant :
- une entité de réception configurée pour recevoir un message de requête de service (15) à partir d'un dispositif d'abonné (5),
- une entité de recherche (52) configurée pour rechercher, par procuration pour le dispositif d'abonné (5), un premier serveur (8) à l'intérieur d'un groupe de serveurs (8, 9, 10), chacun des serveurs (8, 9, 10) étant configuré pour fournir le service demandé au dispositif d'abonné (5), l'entité de recherche (52) considérant dans cette recherche au moins un emplacement du dispositif d'abonné (5) et un emplacement du premier serveur (8), le noeud mandataire étant en outre configuré pour amener le premier serveur (8) à rechercher un deuxième serveur (9) ayant couramment suffisamment de ressources pour fournir le service au dispositif d'abonné (5),
le noeud mandataire (12) séparant un domaine de réseaux sans fil et fixe ;
**caractérisé en ce que**
l'entité de recherche (52) du noeud mandataire (12) est configurée pour envoyer un message d'anycast de recouvrement au groupe de serveurs (8, 9, 10) qui offrent le service demandé, le message amenant chaque serveur à comparer son propre emplacement avec celui du dispositif d'abonné qui est noté à l'intérieur du message, le serveur étant configuré pour noter, si la distance est inférieure à toutes les autres distances qui ont été considérées antérieurement, sa position à l'intérieur du message et l'anycast continuant : le serveur qui est le plus proche du dispositif d'abonné étant noté à l'intérieur du message et étant informé par le dernier serveur visité ;
et **en ce que**
le noeud mandataire (12) est configuré pour amener un premier serveur, lequel serveur ayant été approvisionné avec un algorithme LALA, à trouver un deuxième serveur fournissant suffisamment de ressources de traitement ou autres pour fournir le service.

2. Noeud mandataire selon l'une quelconque des revendications précédentes, dans lequel en considérant l'emplacement de dispositif d'abonné dans la recherche, le noeud mandataire (12) est configuré pour demander (16) des données d'emplacement de dispositif d'abonné à une entité de résolution d'emplacement (14).

3. Noeud mandataire selon la revendication 2, dans lequel en considérant l'emplacement de dispositif d'abonné dans la recherche, le noeud mandataire (12) est configuré pour demander des données d'emplacement de dispositif d'abonné à une entité de résolution d'emplacement (14, 5) configurée pour utiliser un des éléments suivants : un registre de données d'abonné ; un système de détection de position de dispositif assisté par satellite ; un système de détection de position de dispositif assisté par réseau radio.

4. Noeud mandataire selon l'une quelconque des revendications précédentes, dans lequel en considérant l'emplacement de dispositif d'abonné et l'emplacement de serveur, l'entité de recherche (52) du noeud mandataire (12) comprend un mécanisme de recherche destiné à trouver un serveur à l'intérieur du groupe de serveurs (8, 9, 10) qui est géographiquement près du dispositif d'abonné (5).

5. Noeud mandataire selon l'une quelconque des revendications précédentes dans lequel, si le mandataire (12) connaît déjà les emplacements du groupe de serveurs (8, 9), il (12) est configuré pour router directement un message de recherche vers le serveur qui est le plus proche du dispositif d'abonné, le message amenant le serveur à rechercher un serveur avec suffisamment de ressources pour fournir le service.

6. Noeud mandataire selon l'une quelconque des revendications précédentes, dans lequel le noeud mandataire (12) est configuré pour recevoir des informations de succès et si aucune information indiquant un succès n'est reçue dans un temps prédéterminé, pour recommencer la recherche.

7. Noeud mandataire selon l'une quelconque des revendications précédentes, dans lequel le noeud mandataire (12) est configuré pour recevoir un message (23) à partir du serveur trouvé (9) ayant couramment suffisamment de ressources pour fournir le service, le message représentant une identité du serveur trouvé.

8. Réseau de télécommunication comprenant :
- un noeud mandataire (12) selon l'une quelconque des revendications précédentes,
- des serveurs dont certains (8, 9, 10) respectivement configurés pour fournir un service au dispositif d'abonné (5).

9. Réseau de télécommunication selon la revendication 8, dans lequel un premier serveur à l'intérieur du groupe de serveurs (8, 9, 10) qui est trouvé ou connu du noeud mandataire (12) et qui est le plus proche du dispositif d'abonné est configuré pour rechercher (20, 21, 22), après avoir reçu un message à partir du noeud mandataire (12), un deuxième serveur (8, 9, 10) avec couramment suffisamment de ressources pour fournir le service.

10. Réseau de télécommunication selon l'une quelconque des revendications 8-9, dans lequel le serveur trouvé (9) ayant suffisamment de ressources pour fournir le service, et étant trouvé par le serveur le plus proche, est configuré pour envoyer un message (24) demandant une connexion avec le dispositif d'abonné (5).

11. Réseau de télécommunication selon l'une quelconque des revendications 8-10, dans lequel un serveur trouvé (8, 9, 10) avec couramment suffisamment de ressources pour fournir le service, et étant trouvé par le serveur le plus proche, est configuré pour envoyer au serveur mandataire un message (23) indiquant qu'il a été trouvé.

12. Procédé permettant de rechercher un serveur dans un réseau de télécommunication, le procédé comprenant :
- la réception au niveau d'un serveur mandataire (12) d'un message de requête (15) à partir d'un dispositif d'abonné (5), le message de requête (15) représentant une requête pour un service,
- la sélection (18 ; 19), par le serveur mandataire (12), par procuration pour le dispositif d'abonné (5), d'un premier serveur (8) à partir d'un groupe de serveurs (8, 9, 10), chacun des serveurs (8, 9, 10) étant configuré pour fournir le service demandé, la sélection dépendant de l'emplacement du dispositif d'abonné (5) et de l'emplacement du serveur sélectionné (8),
- la recherche (20, 21, 22), par le serveur sélectionné (8), d'un deuxième serveur (9) ayant couramment suffisamment de ressources pour fournir le service demandé, et
le noeud mandataire (12) séparant un domaine de réseaux sans fil et fixe ;
**caractérisé en ce que**
une entité de recherche du noeud mandataire (12) envoie un message d'anycast de recouvrement au groupe de serveurs (8, 9, 10) qui offrent le service demandé, le message amenant chaque serveur à comparer son propre emplacement avec celui du dispositif d'abonné (5) qui est noté à l'intérieur du message, et si la distance est inférieure à toutes les autres distances qui ont été considérées antérieurement, le serveur note sa position à l'intérieur du message, l'anycast continue, et le serveur qui est le plus proche du dispositif d'abonné est noté à l'intérieur du message et est informé par le dernier serveur visité ;
et **en ce que**
au niveau d'un premier serveur, qui est le plus proche du dispositif d'abonné, un algorithme LALA est utilisé pour trouver un serveur fournissant suffisamment de ressources de traitement ou autres pour fournir le service.

13. Procédé selon la revendication 12, comprenant en outre :
- l'envoi d'un message (23, 24), par le serveur (9) trouvé comme ayant couramment suffisamment de ressources pour fournir le service, représentant une requête de connexion avec le dispositif d'abonné (5) ou le serveur mandataire (12).

14. Procédé selon l'une quelconque des revendications 12-13, dans lequel le noeud mandataire (12) est situé dans un réseau fixe ou dans un réseau mobile cellulaire ou dans tout autre réseau mobile.

15. Procédé selon l'une quelconque des revendications 12-14, dans lequel le noeud mandataire (12) est situé entre des limites de réseau d'au moins un réseau de télécommunication.

16. Procédé selon l'une quelconque des revendications 12-15, dans lequel en considérant l'emplacement de dispositif d'abonné dans la recherche, le noeud mandataire (12) demande (16) des données d'emplacement de dispositif d'abonné à une unité de résolution d'emplacement (14).

17. Procédé selon l'une quelconque des revendications 12-16, dans lequel en considérant l'emplacement de dispositif d'abonné dans la recherche, le noeud mandataire (12) demande (16) des données d'emplacement de dispositif d'abonné (emplacement utilisateur) à une entité de résolution d'emplacement (14) en utilisant un des éléments suivants : un registre de données d'abonné; un système de détection de position de dispositif assisté par satellite ; un système de détection de position de dispositif assisté par réseau radio.

18. Procédé selon l'une quelconque des revendications 12-17, dans lequel en considérant l'emplacement de dispositif d'abonné et l'emplacement de serveur, le noeud mandataire (12) utilise un mécanisme de recherche destiné à trouver un serveur (8, 9, 10) qui est géographiquement près du dispositif d'abonné (5).

19. Procédé selon l'une quelconque des revendications 12-18, dans lequel au cas où le mandataire (12) connaît déjà les emplacements des serveurs (8, 9, 10), il route directement un message de recherche vers le serveur qui est le plus proche du dispositif d'abonné.

20. Procédé selon l'une quelconque des revendications 12-19, dans lequel le noeud mandataire (12) reçoit des informations (23) concernant le succès de la recherche d'un serveur ayant suffisamment de ressources, et si aucun message indiquant un succès n'est reçu dans un temps prédéterminé, le noeud mandataire (12) recommence la recherche.

21. Procédé selon l'une quelconque des revendications 12-20, dans lequel le noeud mandataire (12) reçoit un message (23) à partir du serveur trouvé (8, 9, 10) ayant couramment suffisamment de ressources pour fournir le service, le message représentant une identité du serveur trouvé.

22. Procédé selon l'une quelconque des revendications 12-21, dans lequel un serveur trouvé (8, 9, 10) ayant couramment suffisamment de ressources pour fournir le service, et étant trouvé par le serveur le plus proche, envoie un message (23) au dispositif d'abonné (5).

23. Dispositif de mémoire comprenant des moyens de code stockés conçus pour produire les étapes de l'une quelconque des revendications de procédé précédentes 12-22, lorsqu'ils sont chargés dans la mémoire d'un ordinateur.
